# FASCICULE DE BREVET EUROPEEN

(11) **EP 1 593 819 B1**
(45) Date de publication et mention de la délivrance du brevet: **28.06.2006**
(21) Numéro de dépôt: 05075890.3
(22) Date de dépôt: 18.04.2005
(51) Int. Cl.: F01D 25/24, F01D 25/26

(54) **Dispositif de fixation d'un anneau brûleur dans une chambre de postcombustion d'un turboréacteur**
Befestigungsvorrichtung für einen Brennerring innerhalb einer Nachverbrennungskammer eines Strahltriebwerkes
Mounting device for a burner ring inside a postcombustion chamber of a turbo-jet engine

(30) Priorité: 05.05.2004 FR 0404798
(43) Date de publication de la demande: 09.11.2005
(73) Titulaire: SNECMA, 75015 Paris (FR)
(72) Inventeur: Bunel, Jacques, 94260 Fresnes (FR); Roche, Jacques, 87160 St. Sulpice les feuilles (FR)
(74) Mandataire: Nguyen, Dominique

(56) Documents cités:
- EP-A2- 0 778 408
- US-A- 5 224 825
- US-A- 5 323 600
- US-A- 5 622 472

## Description

La présente invention concerne un dispositif de fixation d'un anneau brûleur sur des bras accroche-flammes dans une chambre de postcombustion d'un turboréacteur à double flux (par exemple EP0778408).

De façon classique, l'anneau brûleur d'une chambre de postcombustion est monté au voisinage d'une extrémité radialement externe des bras accroche-flammes qui s'étendent dans le flux primaire sortant de la chambre de combustion du turboréacteur.

En fonctionnement, la température dans la chambre de postcombustion du turboréacteur est à environ 1100°K en l'absence de postcombustion et atteint environ 2000°K en mode postcombustion.

L'anneau brûleur est alors soumis à de très fortes températures et à des rayonnements importants qui engendrent une dilatation thermique importante de ses composants.

Il est connu de former l'anneau brûleur au moyen de secteurs d'anneau placés bout à bout en conservant un espace entre les extrémités en regard de ces secteurs pour leur permettre de se dilater librement lors du fonctionnement du turboréacteur.

La fixation des secteurs d'anneau brûleur sur les bras accroche-flammes ne peut pas être réalisée de façon simple au moyen de boulons en raison des dilatations thermiques importantes des pièces. Il faut de plus que les moyens de fixation utilisés puissent être mis en oeuvre dans un espace réduit, d'accès limité et de préférence sans utiliser un outillage spécial qui ne serait pas facile à manipuler à l'intérieur de la chambre de postcombustion. Il faut de plus que ces moyens de fixation soient protégés thermiquement.

L'invention a notamment pour but d'apporter une solution simple, économique et efficace à ces problèmes.

Elle propose à cet effet un dispositif de fixation d'un anneau brûleur sur des bras accroche-flammes dans une chambre de postcombustion d'un turboréacteur, l'anneau brûleur étant formé de secteurs d'anneau placés sensiblement bout à bout, caractérisé en ce que les extrémités en regard des secteurs d'anneau consécutifs sont reçues et guidées entre deux plaques sensiblement parallèles à orientation circonférentielle des bras accroche-flammes et sont immobilisées entre ces plaques par des pièces de verrouillage engagées entre lesdites plaques et entre les extrémités en regard des secteurs d'anneau, lesdites pièces de verrouillage étant elles-mêmes retenues entre lesdites plaques par des moyens de blocage engagés dans des orifices alignés desdites plaques et desdites pièces de verrouillage.

Le dispositif selon l'invention n'utilise pas de vis et de boulons et permet une libre dilatation tridimensionnelle des secteurs d'anneau. En outre, le montage et le démontage du dispositif selon l'invention sont simples, faciles et ne nécessitent pas d'outillage spécial.

Avantageusement, chaque pièce de verrouillage est monobloc et de forme générale arrondie pour ne pas présenter de pointes ou de saillies qui feraient office d'accroche-flammes en mode postcombustion.

Chaque pièce de verrouillage comprend deux faces opposées, respectivement radialement interne et radialement externe, qui sont engagées entre des ailes des secteurs d'anneau et qui ont une forme et une courbure correspondant à celles des ailes des secteurs d'anneau.

Les pièces de verrouillage épousent ainsi la forme intérieure des secteurs d'anneau brûleur et maintiennent efficacement ces secteurs tout en permettant leur libre dilatation en mode postcombustion.

Selon une autre caractéristique de l'invention, chaque pièce de verrouillage comporte un passage traversant orienté radialement par rapport à l'axe de la chambre de postcombustion et recevant une tige cylindrique dont les extrémités sont engagées dans les orifices précités des plaques du bras accroche-flammes.

Cette tige assure le blocage de la pièce de verrouillage et la retenue axiale et en rotation de la pièce de verrouillage et des secteurs d'anneau par rapport au bras accroche-flammes.

Les extrémités de la tige affleurent les surfaces desdites plaques qui sont situées du côté opposé à la pièce de verrouillage, afin de ne pas former de pointes ou de saillies sur lesquelles pourraient s'accrocher les flammes en mode post-combustion.

Dans un mode de réalisation préféré de l'invention, le dispositif comprend des moyens d'arrêt en translation de la tige dans le passage traversant de la pièce de verrouillage, ces moyens comprenant un épaulement formé sur la surface cylindrique de la tige et venant en appui sur un épaulement de la surface interne du passage de la pièce de verrouillage.

Ces épaulements permettent de positionner précisément la tige dans le passage traversant de la pièce de verrouillage, dans une position de blocage où les extrémités de la tige affleurent juste les surfaces des plaques des bras.

Dans une variante de réalisation de l'invention, les épaulements de la tige et du passage de la pièce de verrouillage sont excentrés ou dissymétriques par rapport à l'axe de la tige et du passage et forment ainsi des moyens d'immobilisation de la tige en rotation dans le passage.

Dans le mode de réalisation préféré de l'invention, la tige comprend un logement de réception d'une goupille dont une première extrémité est immobilisée en rotation et en translation dans ledit logement et dont la seconde extrémité s'étend dans l'orifice précité d'une des plaques du bras accroche-flammes et est retenue par des moyens prévus sur cette plaque.

La goupille permet d'achever le blocage du dispositif selon l'invention entre les plaques du bras.

Lesdits moyens prévus sur la plaque comprennent avantageusement une rainure dans laquelle la seconde extrémité de la goupille est rabattue par déformation plastique.

Le logement de la goupille dans la tige est avantageusement en forme de L et comporte un passage radial recevant la première extrémité de la goupille et une fente longitudinale reliant le passage radial à une extrémité de la tige. La goupille se monte alors facilement par translation dans la tige, qui se monte elle-même par translation dans le passage traversant de la pièce de verrouillage et dans les orifices des plaques précitées.

Le montage et le démontage du dispositif sont donc simples et faciles à mettre en oeuvre.

D'autres avantages et caractéristiques de l'invention apparaîtront à la lecture de la description suivante faite à titre d'exemple non limitatif et en référence aux dessins annexés dans lesquels :
- la figure 1 est une vue schématique partielle en perspective des extrémités de deux secteurs d'anneau brûleur et d'un dispositif de fixation selon l'invention ;
- la figure 2 est une vue schématique partielle en coupe axiale d'un bras accroche-flammes comprenant le dispositif selon l'invention pour la fixation des secteurs d'anneau ;
- la figure 3 est une vue schématique en perspective de la pièce de verrouillage du dispositif selon l'invention ;
- la figure 4 est une vue schématique en coupe axiale de la pièce de verrouillage du dispositif selon l'invention ;
- la figure 5 est une vue schématique en coupe axiale de la tige du dispositif selon l'invention ;
- la figure 6 est une vue en coupe selon la ligne A-A de la figure 5 ;
- la figure 7 est une vue schématique de la goupille utilisée dans le dispositif selon l'invention ;
- la figure 8 est une vue schématique en coupe axiale de la pièce de verrouillage selon une variante de réalisation du dispositif selon l'invention ;
- la figure 9 est une vue schématique en coupe axiale de la tige dans cette variante de réalisation du dispositif selon l'invention.

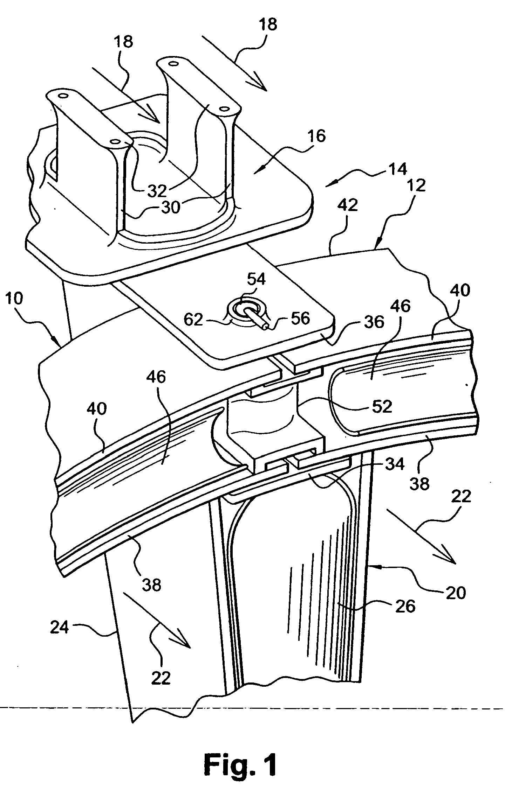

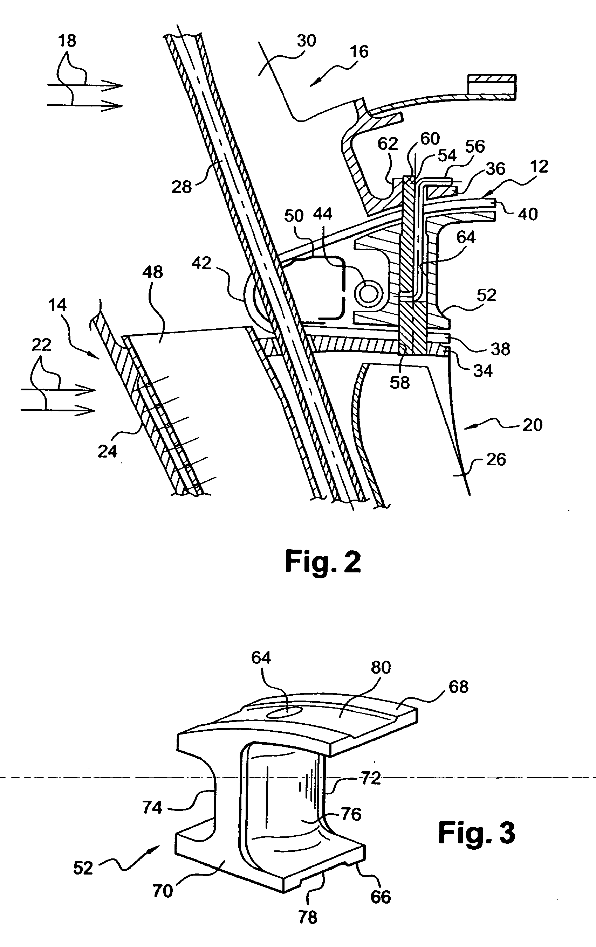

On se réfère d'abord aux figures 1 et 2 qui sont des vues partielles d'un anneau brûleur formé de secteurs 10, 12 portés par des bras accroche-flammes 14 d'une chambre de postcombustion d'un turboréacteur à double flux.

Les bras accroche-flammes 14 s'étendent radialement autour de l'axe du turboréacteur et comprennent une partie radialement externe 16 s'étendant dans le flux secondaire du turboréacteur, schématiquement représenté par les flèches 18, et une partie radialement interne 20 s'étendant dans le flux primaire du turboréacteur, schématiquement représenté par les flèches 22. Les bras 14 sont régulièrement espacés les uns des autres et sont par exemple au nombre de neuf dans la chambre de postcombustion.

La partie radialement interne 20 de chaque bras 14 est formée d'un dièdre creux dont l'arête 24 est orientée vers l'amont du turboréacteur et qui est fermé du côté aval par une paroi incurvée 26 formant écran de protection thermique d'une rampe 28 d'alimentation en carburant qui s'étend radialement dans le bras 14 depuis un carter externe de la chambre de postcombustion et qui comprend des trous de pulvérisation de carburant orientés par exemple vers l'aval.

La partie radialement externe de l'arête 24 du dièdre du bras 14 est en général découpée pour former une ouverture de captation d'une partie du flux secondaire 18 et les deux parois latérales 30 de cette partie du dièdre sont fixées sur le carter externe précité par l'intermédiaire de pattes planes 32 perpendiculaires à ces parois, présentant des orifices de passage de moyens de fixation du type vis - écrou ou analogues.

Chaque bras accroche-flammes 14 comprend au voisinage de son extrémité radialement externe, deux plaques parallèles 34, 36, respectivement radialement interne et radialement externe, à orientation circonférentielle et qui servent de support et de guidage aux extrémités des secteurs d'anneau 10, 12. Ces plaques 34, 36 sont de forme approximativement rectangulaire et s'étendent, en direction axiale, vers l'aval depuis le bras 14.

Les secteurs d'anneau brûleur 10, 12 ont une forme générale de dièdre à sommet arrondi et s'étendent circonférentiellement autour de l'axe de la chambre de postcombustion.

Chaque secteur comprend deux ailes 38, 40 radialement interne et radialement externe, reliées entre elles du côté amont par un sommet arrondi 42, l'aile interne 38 étant de forme sensiblement cylindrique et centrée sur l'axe de la chambre de postcombustion tandis que l'aile externe 40 est légèrement incurvée en section axiale et s'étend en oblique vers l'extérieur d'amont en aval.

Les plaques 34, 36 du bras 14 sont sensiblement parallèles aux ailes 38, 40 des secteurs d'anneau brûleur 10, 12, dans la vue en coupe axiale de la figure 2, et au voisinage immédiat de ces ailes 38, 40.

Une rampe annulaire 44 d'alimentation en carburant s'étend dans chaque secteur d'anneau brûleur et est raccordée radialement au carter externe de la chambre de postcombustion. Elle comprend des trous de pulvérisation de carburant orientés vers l'aval et est protégée thermiquement du côté aval par une paroi incurvée 46 logée entre les extrémités aval des ailes 38, 40 de chaque secteur d'anneau brûleur 10, 12.

Un caisson de ventilation 48 est logé dans chaque bras 14 entre l'arête 24 de celui-ci et la rampe 28 d'alimentation en carburant qui passe entre les extrémités des secteurs d'anneau brûleur et par un orifice de la plaque interne 34 du bras 14. Un caisson de ventilation 50 est disposé dans chaque secteur d'anneau brûleur et s'étend le long de la rampe 44 entre celle-ci et le sommet arrondi 42 du secteur. Les caissons de ventilation 48, 50 sont alimentés en air par la partie du flux secondaire 18 qui est captée par la partie radialement externe 16 de chaque bras 14.

En fonctionnement, la température du flux secondaire 18 est de l'ordre de 200°C par exemple, et celle du flux primaire 22 peut varier entre 800 et 1800°C selon le régime de fonctionnement du turboréacteur. La circulation du flux secondaire dans les bras 14 et dans l'anneau brûleur permet de refroidir les rampes 28, 44, les bras 14 et les secteurs d'anneau 10, 12, et d'améliorer la pulvérisation du carburant dans le flux primaire 22.

Lors du montage des secteurs d'anneau 10, 12, les extrémités de ces secteurs sont engagées entre les plaques parallèles 34, 36 des bras 14 et y sont maintenues par des dispositifs de fixation selon l'invention, dont chacun comprend une pièce de verrouillage 52 engagée à la fois entre les plaques parallèles 34, 36 du bras 14 et entre les extrémités de deux secteurs d'anneau 10, 12. La pièce de verrouillage 52 est retenue axialement et circonférentiellement par des moyens de blocage comprenant une tige 54 et une goupille 56, insérées dans des orifices radiaux alignés des plaques 34, 36 du bras 14 et de la pièce de verrouillage 52.

Plus précisément, les plaques 34, 36 du bras 14 comprennent des orifices alignés 58, 60 dans lesquels sont reçues les extrémités des moyens de blocage 54, 56. L'orifice 60 de la plaque radialement externe 36 est réalisé dans un bossage 62 radialement externe, qui présente une rainure axiale dont la fonction sera décrite dans ce qui suit.

Les extrémités circonférentielles en regard des ailes 38, 40 des secteurs d'anneau 10, 12 sont légèrement écartées l'une de l'autre pour permettre le passage des moyens de blocage 54, 56 entre elles.

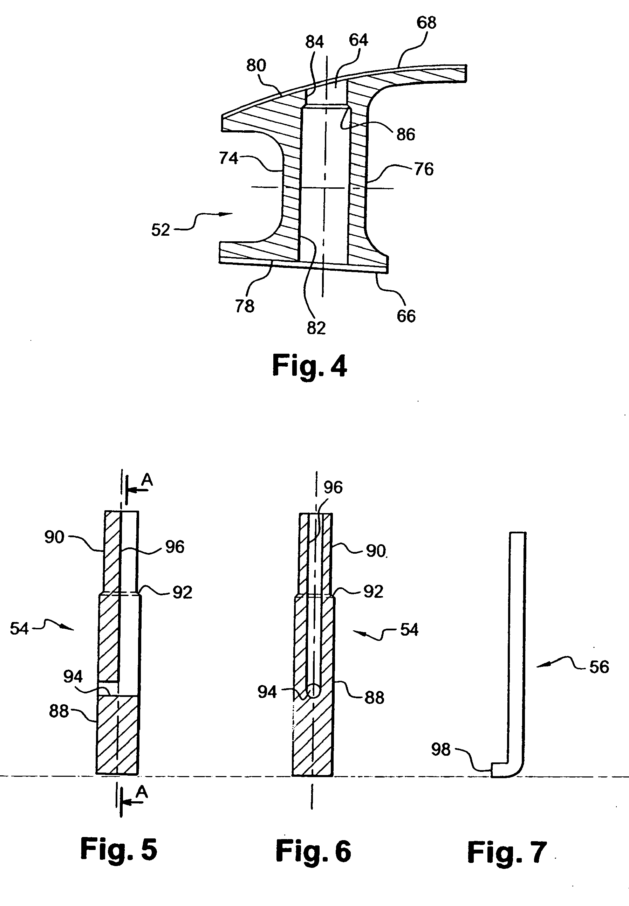

La pièce de verrouillage 52 du dispositif selon l'invention, mieux visible en figures 3 et 4, comprend un passage traversant 64 sensiblement cylindrique orienté radialement par rapport à l'axe du turboréacteur et destiné à recevoir les moyens de blocage 54, 56 précités.

La pièce de verrouillage 52 est monobloc et de forme générale arrondie, c'est-à-dire dépourvue de pointes, d'arêtes vives et de saillies qui pourraient servir d'accroche-flammes. Cette pièce 52 constitue une sorte de cale ou de coin et comprend deux faces 66, 68 opposées radialement interne et externe respectivement, deux faces latérales 70, 72, une face amont 74 et une face aval 76.

La face radialement externe 68 de la pièce de verrouillage 52 a une forme et une courbure correspondant à celles de l'aile radialement externe 40 des secteurs d'anneau 10, 12, et la face radialement interne 66 a une forme plane correspondant à celle de l'aile radialement interne 38 des secteurs d'anneau 10, 12.

Ces faces 66, 68 comportent chacune une rainure axiale 78, 80 de faible profondeur et délimitant dans les faces 66, 68 deux bandes d'appui sur les extrémités en regard des secteurs d'anneau 10, 12. Les rainures 78, 80 permettent de ventiler le dispositif de fixation de l'anneau et de limiter les surfaces de frottement entre les secteurs d'anneau 10, 12 et la pièce de verrouillage 52. Le passage traversant 64 de la pièce 52 débouche sensiblement au milieu des rainures 78, 80 des faces 66, 68 précitées.

La face amont 74 de la pièce de verrouillage 52 forme un canal de logement de la rampe annulaire 44 du secteur d'anneau brûleur, comme cela est représenté en figure 2, et la face aval 76 a une forme arrondie qui est sensiblement dans le prolongement des parois incurvées 46 précitées formant écran de protection thermique de la rampe 44.

Les faces latérales 70, 72 font face aux extrémités des parois incurvées précitées 46, comme cela est représenté en figure 1.

Dans le mode de réalisation de la figure 4, le passage traversant 64 comprend deux parties cylindriques 82, 84 coaxiales de diamètres différents reliées par un lamage tronconique 86.

La partie cylindrique 82 de plus grand diamètre s'étend depuis la face interne 66 sur une majeure partie de la hauteur de la pièce de verrouillage 52 jusqu'au lamage 86, et la partie cylindrique 84 de diamètre plus petit s'étend depuis le lamage 86 jusqu'à la face externe 68 de la pièce de verrouillage 52.

La tige 54 destinée être montée dans le passage traversant 64 de la pièce de verrouillage 52 est représentée aux figures 5 et 6, et a une forme complémentaire de celle du passage traversant 64 de la pièce de verrouillage 52. Elle comprend deux parties cylindriques 88, 90 coaxiales de diamètres différents reliées par un épaulement tronconique 92.

La partie cylindrique 88 de plus grand diamètre s'étend de l'extrémité radialement interne de la tige 54 jusqu'à l'épaulement 92, son diamètre est légèrement inférieur au diamètre interne de la partie 82 de plus grand diamètre du passage 64 et sa longueur est supérieure à celle de cette partie 82 afin que son extrémité radialement interne puisse être reçue dans l'orifice 58 de la plaque interne 34 du bras 14, comme représenté en figure 2.

La partie cylindrique 90 de plus petit diamètre s'étend dans l'alignement de la partie 88 de plus grand diamètre depuis l'épaulement 92 jusqu'à l'extrémité externe de la tige 54. Son diamètre est légèrement inférieur au diamètre interne de la partie 84 de plus petit diamètre du passage 64 et sa longueur est supérieure à celle de cette partie 84 afin que son extrémité radialement externe puisse être reçue dans l'orifice 60 de la plaque externe 36 du bras 14, comme représenté en figure 2.

La tige 54 est montée avec jeu dans les orifices 58, 60 des plaques 34, 36 du bras 14 et dans le passage traversant 64 de la pièce de verrouillage 52.

La tige 54 comprend en outre un logement de réception de la goupille 56 des moyens de blocage. Ce logement est en forme de L et comporte un passage 94 radial par rapport à l'axe de la tige 54 et formé sensiblement au milieu de la partie cylindrique 88 de plus grand diamètre, et une fente longitudinale 96 reliant le passage radial 94 à l'extrémité radialement externe de la tige 54.

La goupille 56 représentée en figure 7 est cylindrique rectiligne de petit diamètre avec une extrémité 98 coudée à angle droit. Elle est par exemple en matériau métallique.

La goupille 56 est destinée à être engagée dans le logement en L de la tige 54, l'extrémité coudée 98 étant reçue dans le passage radial 94 de la tige 54 et le reste de la goupille 56 s'étendant dans la fente longitudinale 96 de la tige 54. La goupille 56 a un diamètre légèrement inférieur à la largeur de la fente 96 de la tige 54 et est montée avec jeu dans celle-ci. La goupille 56 a une longueur supérieure à celle de la fente 96 de sorte que son extrémité libre dépasse axialement de l'extrémité radialement externe de la tige 54.

Comme indiqué plus haut, la tige 54 portant la goupille 56 est engagée dans les orifices 58, 60 des plaques 34, 36 du bras 14 et dans le passage traversant 64 de la pièce de verrouillage 52 jusqu'à ce que l'épaulement 92 de la tige 54 vienne en appui sur le lamage 86 du passage 64, les extrémités libres de la tige 54 affleurant les surfaces des plaques 34, 36 qui sont situées du côté opposé à la pièce de verrouillage 52.

Pour terminer la fixation des secteurs d'anneau brûleur 10, 12 sur le bras accroche-flammes 14, l'extrémité libre de la goupille 56 qui dépasse de l'extrémité radialement externe de la tige 54 et de la plaque externe 36 du bras 14 est pliée à environ 90° par déformation plastique jusqu'à ce qu'elle vienne dans la rainure précitée du bossage 62 de l'orifice 60 de la plaque externe 36, comme représenté aux figures 1 et 2, pour immobiliser axialement et en rotation la tige 54 dans le passage traversant 64 de la pièce de verrouillage 52.

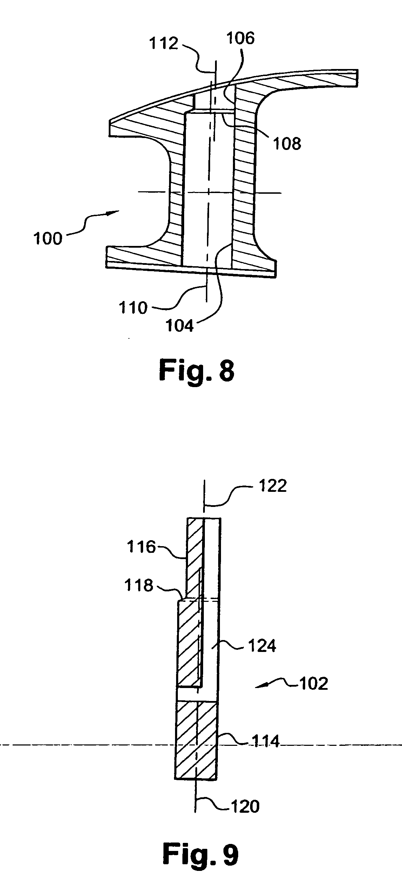

Dans la variante de réalisation des figures 8 et 9, la goupille 56 utilisée est identique à celle précédemment décrite, la pièce de verrouillage 100 représentée en figure 8 et la tige 102 représentée en figure 9 étant légèrement différentes de celles du premier mode de réalisation du dispositif selon l'invention.

En figure 8, le passage traversant de la pièce 100 comprend deux parties cylindriques 104, 106 excentrées de diamètres différents reliées par une surface 108 qui est tronconique d'un côté et cylindrique de l'autre côté.

La partie cylindrique 104 d'axe 110, qui présente un plus grand diamètre, s'étend depuis la face radialement interne de la pièce 100 sur une majeure partie de la hauteur de cette pièce jusqu'à la surface 108, et la partie cylindrique 106 d'axe 112 ayant un diamètre plus petit est excentrée par rapport à l'axe 110 et s'étend depuis la surface 108 jusqu'à la face radialement externe de la pièce de verrouillage 100.

La tige 102 présente une forme complémentaire de celle du passage traversant de la pièce de verrouillage 100, et comprend deux parties cylindriques 114, 116 non concentriques de diamètres différents reliées par un épaulement semi-tronconique 118.

La partie cylindrique 114 d'axe 120, qui présente un grand diamètre, s'étend sur la majeure partie de la tige 102 jusqu'à l'épaulement 118, et la partie cylindrique 116 d'axe 122 ayant un diamètre plus petit est excentrée par rapport à l'axe 120 et s'étend vers l'extérieur depuis l'épaulement 118.

La goupille 56, représentée en figure 7, est insérée de la même manière que décrite précédemment dans un logement en L 124 formé dans la tige 102, la tige 102 étant ensuite introduite, depuis l'intérieur du bras 14, dans les orifices 58, 60 des plaques 34, 36 du bras 14 et dans le passage traversant de la pièce de verrouillage 100.

Comme dans le premier mode de réalisation du dispositif selon l'invention, la pièce de verrouillage 100 est retenue axialement vers l'aval par la tige 102 engagée dans les orifices 58, 60 précités des plaques 34, 36 du bras 14, la tige 102 est en appui par son épaulement 118 sur la surface 108 du passage traversant de la pièce 100 et le pliage à environ 90° de l'extrémité de la goupille 56 permet de bloquer axialement la tige 102 dans le passage traversant de la pièce 100. L'immobilisation en rotation de la tige 102 dans le passage de la pièce de verrouillage 100 est assurée automatiquement par l'excentricité des parties cylindriques 114, 116 de la tige 102 et des parties cylindriques 104, 106 du passage traversant de la pièce 100.

## Revendications

1. Dispositif de fixation d'un anneau brûleur sur des bras accroche-flammes (14) dans une chambre de postcombustion d'un turboréacteur, l'anneau brûleur étant formé de secteurs d'anneau (10, 12) placés sensiblement bout à bout, **caractérisé en ce que** les extrémités en regard des secteurs d'anneau (10, 12) consécutifs sont reçues et guidées entre deux plaques (34, 36) sensiblement parallèles à orientation circonférentielle des bras accroche-flammes (14) et sont immobilisées entre ces plaques (34, 36) par des pièces de verrouillage (52) engagées entre lesdites plaques (34, 36) et entre les extrémités en regard des secteurs d'anneau (10, 12), lesdites pièces de verrouillage (52) étant elles-mêmes retenues entre lesdites plaques (34, 36) par des moyens de blocage (54, 56) engagés dans des orifices (58, 60, 64) alignés desdites plaques (34, 36) et desdites pièces de verrouillage (52).

2. Dispositif selon la revendication 1, **caractérisé en ce que** chaque pièce de verrouillage (52) est monobloc et de forme générale arrondie.

3. Dispositif selon la revendication 1 ou 2, **caractérisé en ce que** chaque pièce de verrouillage (52) comprend deux faces (66, 68) opposées, respectivement radialement interne et radialement externe, qui sont engagées entre des ailes (38, 40) des secteurs d'anneau (10, 12) et qui ont une forme et une courbure correspondant à celles des ailes (38, 40) des secteurs d'anneau (10, 12).

4. Dispositif selon l'une des revendications précédentes, **caractérisé en ce que** chaque pièce de verrouillage (52) comporte un passage traversant (64) orienté radialement par rapport à l'axe de la chambre de postcombustion et recevant une tige cylindrique (54) dont les extrémités sont engagées dans les orifices (58, 60) précités des plaques (34, 36) du bras accroche-flammes (14).

5. Dispositif selon la revendication 4, **caractérisé en ce que** les extrémités de la tige (54) affleurent les surfaces desdites plaques (34, 36) qui sont situées du côté opposé à la pièce de verrouillage (52).

6. Dispositif selon la revendication 4 ou 5, **caractérisé en ce qu'**il comprend des moyens d'arrêt en translation de la tige (54) dans le passage traversant (64) de la pièce de verrouillage (52), ces moyens comprenant un épaulement (92) formé sur la surface cylindrique de la tige (54) et venant en appui sur un épaulement de la surface interne du passage (64) de la pièce de verrouillage (52).

7. Dispositif selon la revendication 6, **caractérisé en ce que** les épaulements (118) de la tige (102) et du passage de la pièce de verrouillage (100) sont excentrés ou dissymétriques par rapport à l'axe de la tige (102) et du passage et forment des moyens d'immobilisation de la tige (102) en rotation dans le passage.

8. Dispositif selon l'une des revendications 4 à 7, **caractérisé en ce que** la tige (54) comprend un logement de réception d'une goupille (56) dont une première extrémité (98) est immobilisée en rotation et en translation dans ledit logement et dont la seconde extrémité s'étend dans l'orifice (60) précité d'une des plaques (36) du bras accroche-flammes (14) et est retenue par des moyens prévus sur cette plaque (36).

9. Dispositif selon la revendication 8, **caractérisé en ce que** lesdits moyens prévus sur la plaque (36) comprennent une rainure dans laquelle la seconde extrémité de la goupille (56) est rabattue par déformation plastique.

10. Dispositif selon la revendication 8 ou 9, **caractérisé en ce que** le logement de la goupille (56) dans la tige (54) est en forme de L et comporte un passage radial (94) recevant la première extrémité (98) de la goupille (56) et une fente longitudinale (96) reliant le passage radial (94) à une extrémité de la tige (54).

11. Dispositif selon la revendication 10, **caractérisé en ce que** la fente longitudinale (96) débouche à l'extrémité de la tige (54) qui est engagée dans l'orifice (60) de la plaque radialement externe (36) du bras accroche-flammes (14).

12. Dispositif selon l'une des revendications 9 à 11, **caractérisé en ce que** la rainure recevant l'extrémité rabattue de la goupille (56) est formée dans la plaque radialement externe (36) du bras accroche-flammes (14).

13. Dispositif selon l'une des revendications 4 à 12, **caractérisé en ce que** la tige (54) est montée avec jeu dans le passage traversant (64) de la pièce de verrouillage (52) et dans les orifices (58, 60) des plaques précitées (34, 36).

14. Dispositif selon l'une des revendications 8 à 12, **caractérisé en ce qu'**au montage, la pièce de verrouillage (52) est engagée entre les plaques (34, 36) du bras accroche-flammes (14) et entre les extrémités des secteurs d'anneau (10, 12), la goupille (56) est placée dans le logement de la tige (54), la tige (54) portant la goupille (56) est engagée dans le passage traversant (64) de la pièce de verrouillage (52) et dans les orifices (58, 60) des plaques (34, 36), depuis l'intérieur du bras accroche-flammes (14) et radialement de l'intérieur vers l'extérieur, après quoi l'extrémité extérieure de la goupille (56) est rabattue sur la plaque radialement externe (36) du bras accroche-flammes (14).

## Claims

1. Device for fixing a burner ring onto flameholder arms (14) in a turbojet engine afterburner combustion chamber, the burner ring being formed of ring sectors (10, 12) placed more or less end to end, **characterized in that** the facing ends of the consecutive ring sectors (10, 12) are housed and guided between two circumferentially-directed roughly parallel plates (34, 36) of the flameholder arms (14) and are immobilized between these plates (34, 36) by locking pieces (52) engaged between said plates (34, 36) and between the facing ends of the ring sectors (10, 12), said locking pieces (52) being themselves held between said plates (34, 36) by immobilizing means (54, 56) engaged in aligned orifices (58, 60, 64) in said plates (34, 36) and in said locking pieces (52).

2. Device according to Claim 1, **characterized in that** each locking piece (52) is made in one piece and of rounded overall shape.

3. Device according to Claim 1 or 2, **characterized in that** each locking piece (52) comprises two opposed faces (66, 68), a radially inner face and a radially outer face respectively, which are engaged between flanges (38, 40) of the ring sectors (10, 12) and which are of a shape and curvature that correspond to those of the flanges (38, 40) of the ring sectors (10, 12).

4. Device according to one of the preceding claims, **characterized in that** each locking piece (52) comprises a through-passage (64) directed radially with respect to the axis of the afterburner combustion chamber and housing a cylindrical rod (54), the ends of which are engaged in the aforementioned orifices (58, 60) in the plates (34, 36) of the flameholder arm (14).

5. Device according to Claim 4, **characterized in that** the ends of the rod (54) lie flush with the surfaces of said plates (34, 36) which are situated on the opposite side to the locking piece (52).

6. Device according to Claim 4 or 5, **characterized in that** it comprises means for preventing translational movement of the rod (54) in the through-passage (64) of the locking piece (52), these means comprising a shoulder (92) formed on the cylindrical surface of the rod (54) and resting against a shoulder on the internal surface of the passage (64) in the locking piece (52).

7. Device according to Claim 6, **characterized in that** the shoulders (118) of the rod (102) and of the passage in the locking piece (100) are off-centred or dissymmetric with respect to the axis of the rod (102) and of the passage and form means for immobilizing the rod (102) in terms of rotation in the passage.

8. Device according to one of Claims 4 to 7, **characterized in that** the rod (54) comprises a housing to accommodate a pin (56), a first end (98) of which is immobilized in terms of rotation and in terms of translation in said housing and the second end of which extends into the aforementioned orifice (60) in one of the plates (36) of the flameholder arm (14) and is held by means provided on this plate (36).

9. Device according to Claim 8, **characterized in that** said means provided on the plate (36) comprise a groove into which the second end of the pin (56) is knocked over by plastic deformation.

10. Device according to Claim 8 or 9, **characterized in that** the housing for the pin (56) in the rod (54) is L-shaped and has a radial passage (94) accommodating the first end (98) of the pin (56) and a longitudinal slot (96) connecting the radial passage (94) to one end of the rod (54).

11. Device according to Claim 10, **characterized in that** the longitudinal slot (96) opens onto the end of the rod (54) which is engaged in the orifice (60) in the radially outer plate (36) of the flameholder arm (14).

12. Device according to one of Claims 9 to 11, **characterized in that** the groove accommodating the knocked-over end of the pin (56) is formed in the radially outer plate (36) of the flameholder arm (14).

13. Device according to one of Claims 4 to 12, **characterized in that** the rod (54) is mounted with clearance in the through-passage (64) in the locking piece (52) and in the orifices (58, 60) in the aforementioned plates (34, 36).

14. Device according to one of Claims 8 to 12, **characterized in that** on assembly, the locking piece (52) is engaged between the plates (34, 36) of the flameholder arm (14) and between the ends of the ring sectors (10, 12), the pin (56) is placed in the housing of the rod (54), the rod (54) bearing the pin (56) is engaged in the through-passage (64) in the locking piece (52) and in the orifices (58, 60) in the plates (34, 36), from inside the flameholder arm (14) and radially from the inside outwards, after which the outer end of the pin (56) is knocked over onto the radially outer plate (36) of the flameholder arm (14).

## Patentansprüche

1. Befestigungsvorrichtung für einen Brennerring an Flammenfängerarmen (14) in einer Nachbrennkammer eines Zweikreis-TL-Triebwerks, wobei der Brennerring aus Ringsegmenten (10, 12) gebildet wird, die im Wesentlichen aneinander gelegt werden,
**dadurch gekennzeichnet,**
**dass** die einander gegenüberliegenden Enden aufeinander folgender Ringsegmente (10, 12) zwischen zwei im Wesentlichen parallelen Platten (34, 36) mit Ausrichtung der Flammenfängerarme (14) auf der Umkreis aufgenommen und geführt werden und zwischen diesen Platten (34, 36) durch Verriegelungsteile (52), die sich zwischen diesen Platten (34, 36) und zwischen den einander gegenüberliegenden Enden der Ringsegmente (10, 12) in Eingriff befinden, festgestellt werden, wobei diese Verriegelungsteile (52) ihrerseits zwischen diesen Platten (34, 36) durch Blockiermittel (54, 56) festgehalten werden, die sich in in Linie ausgerichteten Öffnungen (58, 60, 64) dieser Platten (34, 36) und dieser Verriegelungsteile (52) in Eingriff befinden.

2. Vorrichtung nach Anspruch 1,
**dadurch gekennzeichnet,**
**dass** jedes Verriegelungsteil (52) einstückig und allgemein abgerundet geformt ist.

3. Vorrichtung nach Anspruch 1 oder 2,
**dadurch gekennzeichnet,**
**dass** jedes Verriegelungsteil (52) zwei entgegengesetzte Seiten (66, 68) aufweist, eine radial innere und eine radial äußere Seite, die sich zwischen Flügeln (38, 40) der Ringsegmente (10, 12) in Eingriff befinden und eine Form und Biegung aufweisen, die der der Flügel (38, 40) der Ringsegmente (10, 12) entsprechen.

4. Vorrichtung nach einem der vorherigen Ansprüche,
**dadurch gekennzeichnet,**
**dass** jedes Verriegelungsteil (52) einen durchgehenden Durchlass (64) aufweist, der radial zur Achse der Nachbrennkammer ausgerichtet ist und eine zylinderförmige Stange (54) aufnimmt, deren Enden sich in Eingriff in den Öffnungen (58, 60) der Platten (34, 36) des Flammenfängerarms (14) befinden.

5. Vorrichtung nach Anspruch 4,
**dadurch gekennzeichnet,**
**dass** die Enden der Stange (54) mit den Oberflächen dieser Platten (34, 36) fluchten, die sich auf der dem Verriegelungsteil (52) entgegengesetzten Seite befinden.

6. Vorrichtung nach Anspruch 4 oder 5,
**dadurch gekennzeichnet,**
**dass** sie Vorschubblockierungsmittel für die Stange (54) in dem durchgehenden Durchlass (64) des Verriegelungsteils (52) enthält, wobei diese Mittel einen Absatz (92) umfassen, der an der zylindrischen Oberfläche der Stange (54) gebildet ist und in Anlage an einem Absatz der Innenfläche des Durchlasses (64) des Verriegelungsteils (52) kommt.

7. Vorrichtung nach Anspruch 6,
**dadurch gekennzeichnet,**
**dass** die Absätze (118) der Stange (102) und des Durchlasses des Verriegelungsteils (100) bezogen auf die Achse der Stange (102) und des Durchlasses außermittig oder asymmetrisch angeordnet sind und so Drehblockierungsmittel für die Stange (102) in dem Durchlass bilden.

8. Vorrichtung nach einem der Ansprüche 4 bis 7,
**dadurch gekennzeichnet,**
**dass** die Stange (54) eine Aufnahme für einen Stift (56) enthält, dessen erstes Ende (98) drehfest und vorschubfest in diesem Sitz festgehalten wird und dessen zweites Ende sich in die genannte Öffnung (60) einer der Platten (36) des Flammenfängerarms (14) erstreckt und durch Mittel, die an dieser Platte (36) vorgesehen sind, festgehalten wird.

9. Vorrichtung nach Anspruch 8,
**dadurch gekennzeichnet,**
**dass** diese an der Platte (36) vorgesehenen Mittel eine Rille beinhalten, in der das zweite Ende des Stifts (56) durch plastische Verformung umgebogen sitzt.

10. Vorrichtung nach Anspruch 8 oder 9,
**dadurch gekennzeichnet,**
**dass** der Sitz des Stifts (56) in der Stange (54) L-förmig ist und einen radialen Durchlass (94) enthält, der das erste Ende (98) des Stifts (56) aufnimmt, sowie einen Längsschlitz (96), der den radialen Durchlass (94) mit einem Ende der Stange (54) verbindet.

11. Vorrichtung nach Anspruch 10,
**dadurch gekennzeichnet,**
**dass** der Längsschlitz (96) am Ende der Stange (54) mündet, die sich in der Öffnung (60) der radial äußeren Platte (36) des Flammenfängerarms (14) in Eingriff befindet.

12. Vorrichtung nach einem der Ansprüche 9 bis 11,
**dadurch gekennzeichnet,**
**dass** die Rille, die das umgebogene Ende des Stifts (56) aufnimmt, in der radial äußeren Platte (36) des Flammenfängerarms (14) gebildet ist.

13. Vorrichtung nach einem der Ansprüche 4 bis 12,
**dadurch gekennzeichnet,**
**dass** die Stange (54) mit Spiel in dem durchgehenden Durchlass (64) des Verriegelungsteils (52) und in den Öffnungen (58, 60) der Platten (34, 36) sitzt.

14. Vorrichtung nach einem der Ansprüche 8 bis 12,
**dadurch gekennzeichnet,**
**dass** das Verriegelungsteil (52) beim Einbau zwischen den Platten (34, 36) des Flammenfängerarms (14) und zwischen den Enden der Ringsegmente (10, 12) in Eingriff gebracht wird, der Stift (56) in die Aufnahme der Stange (54) gesetzt wird, die Stange (54), die den Stift (56) hält, in dem durchgehenden Durchlass (64) des Verriegelungsteils (52) und in den Öffnungen (58, 60) der Platten (34, 36) des Arms (14) vom Inneren des Flammenfängerarms (14) und radial von innen nach außen in Eingriff gebracht wird, wonach dann das äußere Ende des Stifts (56) auf die radial äußere Platte (36) des Flammenfängerarms (14) umgebogen wird.
